# EUROPÄISCHE PATENTSCHRIFT

(11) **EP 4 303 112 B1**
(45) Veröffentlichungstag und Bekanntmachung des Hinweises auf die Patenterteilung: **29.04.2026**
(21) Anmeldenummer: 23181464.1
(22) Anmeldetag: 26.06.2023
(51) Int. Cl.: B62M 3/00, B62M 6/55

(54) **KURBELTRIEB EINES MIT MUSKELKRAFT UND/ODER MOTORKRAFT BETREIBBAREN FAHRZEUGS**
CRANK DRIVE OF A VEHICLE THAT CAN BE OPERATED BY MUSCLE POWER AND/OR MOTOR POWER
MÉCANISME À MANIVELLE D'UN VÉHICULE POUVANT FONCTIONNER AVEC LA FORCE MUSCULAIRE ET/OU LA FORCE MOTRICE

(30) Priorität: 06.07.2022 DE 102022206890
(43) Veröffentlichungstag der Anmeldung: 10.01.2024
(73) Patentinhaber: Robert Bosch GmbH, 70442 Stuttgart (DE)
(72) Erfinder: Binder, Julian, 72827 Wannweil (DE)

(56) Entgegenhaltungen:
- WO-A1-2019/103022
- WO-A1-2022/118705
- DE-U1- 29 721 866
- US-A1- 2015 020 621

## Beschreibung

### Stand der Technik

Die vorliegende Erfindung betrifft einen Kurbeltrieb eines mit Muskelkraft und/oder Motorkraft betreibbaren Fahrzeugs, und ein den Kurbeltrieb umfassendes Fahrzeug.

Bekannt sind Kurbeltriebe von mit Muskelkraft und/oder Motorkraft betreibbaren Fahrzeugen, wie Elektrofahrrädern, die eine Kurbelwelle mit daran befestigten Kurbeln umfassen. Häufig sind die Kurbeln mittels Schrauben an der Kurbelwelle befestigt. Zur genauen Positionierung der Kurbeln relativ zur Kurbelwelle ist üblicherweise auf jeder Seite ein axialer Anschlag für jede Kurbel erforderlich.

Häufig werden dabei Sicherungsringe oder dergleichen verwendet, die beispielsweise in Nuten der Kurbelwelle positioniert werden. Dadurch ergeben sich jedoch Nachteile hinsichtlich der mechanischen Stabilität des Kurbeltriebs.

Ferner wird auf das gattungsgemäße Dokument WO 2019/103022 A1 und weitere Dokumente WO 2022/118705 A1, DE 297 21 866 U1 und US 2015/020621 A1 verwiesen.

### Offenbarung der Erfindung

Der erfindungsgemäße Kurbeltrieb mit den Merkmalen des Anspruchs 1 zeichnet sich demgegenüber durch eine mechanisch besonders stabile Konstruktion aus. Zudem bietet der Kurbeltrieb einen einfachen und kostengünstigen Aufbau mit wenigen Bauteilen. Dies wird erfindungsgemäß erreicht durch einen Kurbeltrieb eines mit Muskelkraft und/oder Motorkraft betreibbaren Fahrzeugs, vorzugsweise eines Elektrofahrrads, umfassend eine Kurbelwelle, eine erste Kurbel, welche auf eine erste Seite der Kurbelwelle aufgesteckt ist, und eine zweite Kurbel, welche auf eine der ersten Seite in Axialrichtung der Kurbelwelle gegenüberliegenden zweiten Seite der Kurbelwelle aufgesteckt ist. Die erste Kurbel ist mittels eines ersten Befestigungselements an der Kurbelwelle befestigt. Die zweite Kurbel ist mittels eines zweiten Befestigungselements an der Kurbelwelle befestigt. Zudem umfasst der Kurbeltrieb ein erstes Lager, welches auf der Seite der ersten Kurbel angeordnet ist, und ein zweites Lager, welches auf der Seite der zweiten Kurbel angeordnet ist. Insbesondere sind die beiden Lager auf der Kurbelwelle angeordnet, um die Kurbelwelle um eine Kurbelachse drehbar zu lagern.

Alternativ kann beispielsweise zumindest eines der beiden Lager auf einer Hohlwelle angeordnet sein, innerhalb der die Kurbelwelle angeordnet ist. Das erste Befestigungselement verspannt dabei die erste Kurbel über das erste Lager gegen die Kurbelwelle, wobei die Kurbelwelle einen nach radial außen vorstehenden Absatz aufweist, an welchem das erste Lager im verspannten Zustand anliegt. Das zweite Befestigungselements verspannt die zweite Kurbel gegen eine zweite Stirnseite der Kurbelwelle.

Mit anderen Worten wird ein Kurbeltrieb bereitgestellt, der auf einer ersten Seite der Kurbelwelle einen inneren Axialanschlag für die erste Kurbel aufweist. Dabei liegt ein axialer Kraftfluss von der ersten Kurbel über das erste Lager, an welchem die Kurbel, vorzugsweise unmittelbar, anliegt, über die Kurbelwelle und über die Befestigung des ersten Befestigungselements an der Kurbelwelle in die Kurbel vor. Auf der zweiten Seite der Kurbelwelle liegt dabei ein äußerer Axialanschlag für die zweite Kurbel vor. Hierbei liegt ein axialer Kraftfluss von der zweiten Kurbel mittels des zweiten Befestigungselements direkt in die Kurbelwelle vor. Insbesondere erfolgt eine exakte Positionierung der Kurbeln mittels der Axialanschläge in Axialrichtung dabei basierend auf einer geometrischen Auslegung der Kurbelwelle, insbesondere einer axialen Länge der Kurbelwelle, bevorzugt von Teilabschnitten der Kurbelwelle.

Der Kurbeltrieb zeichnet sich somit durch einen besonders einfachen Aufbau aus, welcher mit wenigen Bauteilen auskommt. Insbesondere kann dabei auf Sicherungsringe verzichtet werden, da beispielsweise sämtliche Bauteile von der jeweiligen Stirnseite der Kurbelwelle aus auf die Kurbelwelle aufgeschoben und exakt positioniert werden können. Somit ergibt sich der weitere Vorteil, dass eine besonders einfache und zeiteffiziente Herstellung und Montage des Kurbelbetriebs möglich ist. Zudem kann auf Nuten oder dergleichen in der Kurbelwelle verzichtet werden, wodurch eine besonders stabile Konstruktion, insbesondere der Kurbelwelle, bereitgestellt werden kann, da eine Kerbwirkung in der Kurbelwelle verhindert werden kann. Ferner eignet sich der Kurbeltrieb durch die spezielle Konstruktion für die Verwendung von einheitlichen bzw. standardisierten Kurbelschnittstellen seitens der Kurbeln.

Die Unteransprüche haben bevorzugte Weiterbildungen der Erfindung zum Inhalt.

Bevorzugt weist jedes Befestigungselement eine Schraube auf, die stirnseitig in die Kurbelwelle eingeschraubt ist. Insbesondere ist jede Schraube dabei in eine entsprechende in der Stirnseite der Kurbelwelle ausgebildete Bohrung eingeschraubt, vorzugsweise mittels eines Gewindes. Beispielsweise kann die Kurbelwelle eine Durchgangsbohrung entlang der Axialrichtung aufweisen, in die die beiden Schrauben eingeschraubt sind. Damit kann eine einfache, kostengünstige und leicht zu montierende Anordnung bereitgestellt werden.

Besonders bevorzugt weist jedes Befestigungselement jeweils einen Schraubenkopf auf. Der Schraubenkopf jedes Befestigungselements steht dabei mit der entsprechenden Kurbel in axialem Eingriff. Mit anderen Worten verspannt jeder Schraubenkopf die entsprechende Kurbel in axialer Richtung zur Kurbelmitte hin. Beispielsweise kann dabei ein formschlüssiger Eingriff zwischen Schraubenkopf und Kurbel in axialer Richtung vorgesehen sein. Damit kann eine einfache und zuverlässige Befestigung der Kurbeln an der Kurbelwelle erfolgen.

Vorzugsweise liegt im verspannten Zustand ein zweiter Schraubenkopf des zweiten Befestigungselements an der zweiten Stirnseite der Kurbel an. Mit anderen Worten ist das zweite Befestigungselement auf Anschlag in eine Bohrung der Kurbelwelle eingeschraubt. Damit kann der Axialanschlag auf besonders einfache Weise und exakt eingestellt werden.

Die Kurbelwelle weist einen nach radial außen vorstehenden Absatz auf, an welchem das erste Lager im verspannten Zustand anliegt. Insbesondere weist die Kurbelwelle am Absatz einen größeren Außendurchmesser auf, als im Bereich zwischen dem Absatz und der ersten Stirnseite. Dadurch kann das erste Lager, sowie auch zumindest ein Teil der ersten Kurbel auf einfache Weise und präzise auf die Kurbelwelle aufgeschoben werden, wobei der Absatz einen exakt positionierten Axialanschlag bildet. Zudem kann dadurch eine besonders robuste Konstruktion der Verspannung von erster Kurbel und erstem Lager gegen die Kurbelwelle bereitgestellt werden.

Bevorzugt ist das erste Lager ein Kugellager, vorzugsweise ein Rillenkugellager. Ein Innenring des ersten Lagers liegt dabei am Absatz der Kurbelwelle an. Somit kann eine einfache und präzise Positionierung des ersten Lagers und eine mechanisch optimale Belastung des ersten Lagers bereitgestellt werden.

Vorzugsweise ist die Kurbelwelle zwischen der ersten Stirnseite und dem ersten Lager, insbesondere entlang der Axialrichtung der Kurbelwelle, nutfrei ausgebildet. Besonders bevorzugt weist die Kurbelwelle einen konstanten Außendurchmesser entlang der Axialrichtung zwischen der ersten Stirnseite und dem ersten Lager auf. Damit kann eine besonders robuste Konstruktion der Kurbelwelle bereitgestellt werden, da beispielsweise keine Kerbwirkung an der Kurbelwelle auftritt. Insbesondere kann somit eine erhöhte Dauerfestigkeit bei möglichst optimalem Leichtbau der Kurbelwelle bereitgestellt werden.

Weiter bevorzugt umfasst der Kurbeltrieb ferner ein Tretlagerbereich, an welchem die Kurbelwelle mittels der beiden Lager gelagert ist. Beispielsweise ist der Tretlagerbereich ein Teil eines Fahrzeugrahmens des mit Muskelkraft und/oder Motorkraft betreibbaren Fahrzeugs. Insbesondere durch die robuste und präzise positionierte Anordnung der Kurbeln mittels der jeweiligen Verspannungen kann somit auch eine robuste Befestigung und exakte Positionierung der Kurbeln an und relativ zum Tretlagerbereich bereitgestellt werden.

Besonders bevorzugt bilden die beiden Lager eine angestellte Lagerung am Tretlagerbereich. Als angestellte Lagerung wird insbesondere eine Anordnung derart angesehen, dass die beiden Lager in Axialrichtung gegeneinander vorgespannt angeordnet sind. Insbesondere erfolgt dies durch entsprechende Auslegung von in axialer Richtung wirkenden Anschlägen an der Kurbelwelle sowie an Tretlagerbereich. Damit kann eine stabile und genau positionierte Anordnung der Kurbeln relativ zum Tretlagerbereich bereitgestellt werden.

Vorzugsweise ist das erste Lager als Festlager angeordnet. Insbesondere erfolgt dies durch spielfreie Anordnung des ersten Lagers entlang der axialen Richtung der Kurbelwelle jeweils relativ zur Kurbelwelle und relativ zum Tretlagerbereich. Damit stellt das erste Lager eine relativ zum Tretlagerbereich unbewegliche Anordnung der Kurbelwelle und damit auch der Kurbeln sicher.

Bevorzugt ist das zweite Lager als Loslager angeordnet. Insbesondere erlaubt das zweite Lager somit eine relative axiale Bewegung zwischen Tretlagerbereich Kurbelwelle. Bevorzugt ist dabei eine relative axiale Beweglichkeit zwischen zweitem Lager und Kurbelwelle vorgesehen. Somit kann eine mechanisch besonders vorteilhafte Anbindung der Kurbeln und der Kurbelwelle am Tretlagerbereich bereitgestellt werden.

Vorzugsweise ist zwischen jeder der beiden Kurbeln und der Kurbelwelle jeweils eine radiale Verzahnung ausgebildet. Als radiale Verzahnung wird insbesondere eine Verzahnung mit in radialer Richtung vorstehenden Zähnen angesehen. Bevorzugt ist die radiale Verzahnung somit eine Welle-Nabe-Verbindung Die radiale Verzahnung erlaubt dabei eine Drehmomentübertragung zwischen Kurbelwelle und Kurbeln. Insbesondere erlaubt die radiale Verzahnung dabei eine axiale Verschiebung von Kurbel und Kurbelwelle relativ zueinander.

Besonders bevorzugt umfasst der Kurbeltrieb ferner eine Kettenblattaufnahme, welche eingerichtet ist zur Befestigung eines Kettenblatts. Die Kettenblattaufnahme ist dabei auf der Seite der zweiten Kurbel angeordnet. Damit kann eine mechanisch besonders vorteilhafte Einleitung der bei einem Betrieb des Fahrzeugs mittels Muskelkraft auftretenden Kräfte vom Kettenblatt in die Kurbelwelle und in den Tretlagerbereich erfolgen.

Weiterhin betrifft die Erfindung ein mit Muskelkraft und/oder Motorkraft betreibbares Fahrzeug, vorzugsweise ein Elektrofahrrad, das den beschriebenen Kurbeltrieb umfasst. Insbesondere bei einem Elektrofahrrad bietet der Kurbeltrieb den Vorteil einer robusten und gleichzeitig leichtgewichtigen Konstruktion. Insbesondere bei Stürzen oder Schlägen auf die Kurbeln kann dabei aufgrund der robusten mechanischen Abstützung der Kurbeln die Wahrscheinlichkeit einer Beschädigung und/oder relativen Verschiebung der Kurbelwelle verringert werden.

### Kurze Beschreibung der Zeichnungen

Im Folgenden wird die Erfindung anhand eines Ausführungsbeispiels in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einem Kurbeltrieb gemäß einem bevorzugten Ausführungsbeispiel der Erfindung,
- Figur 2: eine Schnittansicht des Kurbeltriebs der Figur 1, und
- Figur 3: eine Detailansicht des Kurbeltriebs der Figur 2.

### Bevorzugte Ausführungsformen der Erfindung

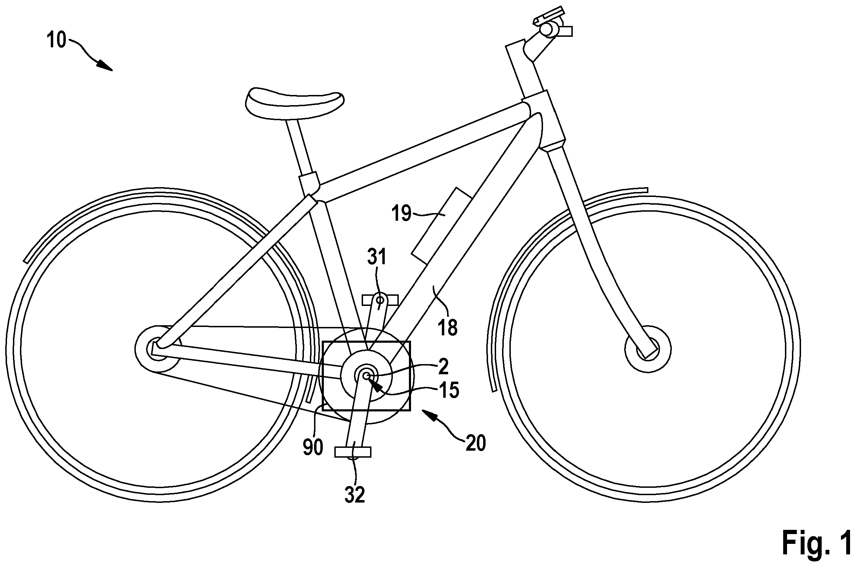

Figur 1 zeigt eine vereinfachte schematische Ansicht eines mit Muskelkraft und/oder Motorkraft betreibbaren Fahrzeugs 10, welches einen Kurbeltrieb 1 gemäß einem bevorzugten Ausführungsbeispiel der Erfindung umfasst. Bei dem Fahrzeug 10 handelt es sich um ein Elektrofahrrad.

Das Fahrzeug 10 umfasst eine Antriebseinheit 20, die im Bereich eines Tretlagers angeordnet und welche vorzugsweise einen Elektromotor und ein Getriebe umfasst. Die Antriebseinheit 20 ist vorgesehen, um mittels eines durch den Elektromotor erzeugten Drehmoments eine mittels Muskelkraft erzeugte Tretkraft des Fahrers motorisch zu unterstützen. Der Elektromotor der Antriebseinheit 20 wird dabei von einem elektrischen Energiespeicher 19 des Fahrzeugs 10 mit elektrischer Energie versorgt.

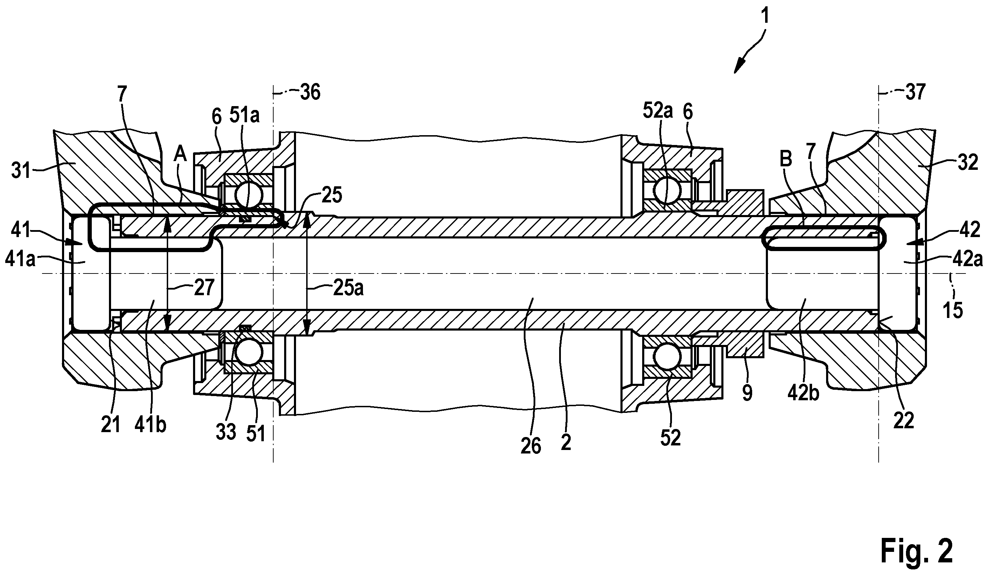

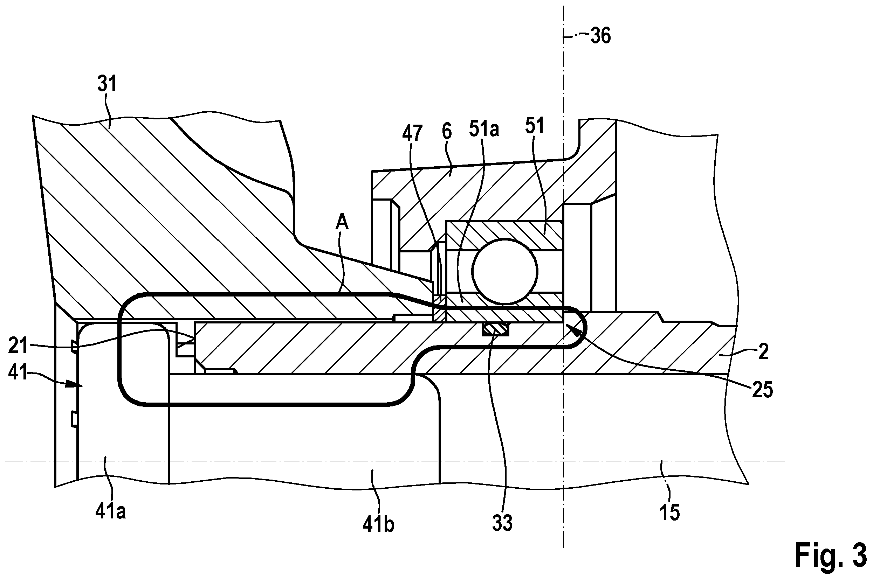

Details des Kurbeltriebs 1 des bevorzugten Ausführungsbeispiels sind in den Figuren 2 und 3 dargestellt, wobei Figur 3 eine Detailansicht der Figur 2 zeigt.

Der Kurbeltrieb 1 umfasst eine Kurbelwelle 2 und eine erste Kurbel 31 und eine zweite Kurbel 32. Die Kurbelwelle 1 ist als Hohlwelle ausgebildet und definiert eine Kurbelachse 15.

Die erste Kurbel 31 ist an einem ersten axialen Ende, in Figur 2 links, der Kurbelwelle 2 auf diese aufgesteckt. Im Detail ist ein axiales Ende der Kurbelwelle 2 in eine Öffnung der ersten Kurbel 31 eingesteckt. Analog ist die zweite Kurbel 32 an einem dem ersten Ende gegenüberliegenden zweiten axialen Ende, in Figur 2 rechts, der Kurbelwelle 2 auf diese aufgesteckt, wobei das zweite axiale Ende der Kurbelwelle 2 in eine Öffnung der zweiten Kurbel 32 eingesteckt ist.

Bevorzugt sind die beiden Kurbeln 31, 32 identisch ausgebildet.

Zwischen jeder Kurbel 31, 32 und der Kurbelwelle 2 ist jeweils eine radiale Verzahnung 7, also eine Welle-Nabe-Verbindung, ausgebildet, mittels welcher ein Drehmoment zwischen der entsprechenden Kurbel 31, 32 und der Kurbelwelle 2 übertragen werden kann.

Jede Kurbel 31, 32 ist mittels eines jeweiligen Befestigungselements 41, 42 an der Kurbelwelle 2 befestigt. Die Befestigungselemente 41, 42 sind dabei als Schrauben ausgebildet, welche jeweils einen Schraubenkopf 41a, 42a, und einen Schraubenschaft 41b, 4 b aufweisen. Der Schraubenschaft 41b, 42b ist jeweils in die Durchgangsöffnung 26 der Kurbelwelle 2 mittels eines Gewindes eingeschraubt.

Zwischen jedem Schraubenkopf 41a, 42a der Befestigungselemente 41, 42 und der entsprechenden Kurbel 31, 32 ist dabei ein axialer Formschluss ausgebildet, sowie bevorzugt ein radialer Formschluss. Mittels des axialen Formschlusses können die Kurbeln 31, 32 durch das Einschrauben der Befestigungselemente 41, 42 in die Kurbelwelle 2 in Richtung einer axialen Kurbelmitte hin verspannt werden.

Weiterhin umfasst der Kurbeltrieb 1 ein erstes Lager 51, das auf der Seite der ersten Kurbel 31 angeordnet ist, und ein zweites Lager 52, das auf der Seite der zweiten Kurbel 32 angeordnet ist. Die beiden Lager 51, 52 sind jeweils als Rillenkugellager ausgebildet.

Innenringe 51a, 52a der beiden Lager 51, 52 sind im gezeigten Ausführungsbeispiel unmittelbar auf der Kurbelwelle 2 angeordnet. Alternativ kann zwischen Kurbelwelle 2 und zumindest einem der beiden Lager 51, 52, bevorzugt dem zweiten Lager 52, eine (nicht dargestellte) Hohlwelle angeordnet sein, innerhalb der die Kurbelwelle 2 angeordnet ist.

Mittels der beiden Lager 51, 52 ist die Kurbelwelle 2 um die Kurbelachse 15 drehbar an einem Tretlagerbereich 6 gelagert. Der Tretlagerbereich 6 ist dabei Teil eines Fahrzeugrahmens 18 des Fahrzeugs 10 (vergleiche Figur 1).

Zwischen Tretlagerbereich 6 und Kurbelwelle 2 sind die beiden Lager 51, 52 dabei in Form einer angestellten Lagerung angeordnet. Dadurch kann eine präzise Positionierung der Kurbelwelle 2 mit den Kurbeln 31, 32 relativ zum Tretlagerbereich 6, also relativ zum Fahrzeugrahmen 18, bereitgestellt werden.

### Das erste Lager 51 ist dabei als Festlager ausgebildet und angeordnet.

Ferner sind Kurbelwelle 2, erste Kurbel 31 und erstes Befestigungselement 41 derart ausgelegt, dass das erste Befestigungselement 41 die erste Kurbel 31 über das erste Lager 51 gegen einen Absatz 25 der Kurbelwelle 2 verspannt. Am Absatz 25 weist die Kurbelwelle 2 dabei einen ersten Außendurchmesser 25a auf, der größer ist als ein Außendurchmesser 27 eines Bereichs der Kurbelwelle 2, der in axialer Richtung zwischen der ersten Stirnseite 21 und dem Absatz 25 liegt.

Dadurch ergibt sich im verspannten Zustand der in Figur 2 und 3 gekennzeichnete Axialkraftfluss A über die beteiligten Elemente. Insbesondere erfolgt somit eine axiale Kraftübertragung vom ersten Schraubenkopf 41a über die erste Kurbel 31 an den Innenring 51a des ersten Lagers 51 zum Absatz 25 der Kurbelwelle 2 und über das Gewinde zwischen erstem Befestigungselement 41 und Kurbelwelle 2 zurück zum Schraubenkopf 51a.

Damit liegt ein erster Axialanschlag 36 am Absatz 25 der Kurbelwelle 2 vor.

Bevorzugt kann dabei zwischen erster Kurbel 31 und Innenring 51a des ersten Lagers 51 eine Distanzscheibe oder Passscheibe 47 angeordnet sein, um eine geometrische Auslegung noch einfacher und präziser gestalten zu können.

Zwischen dem Absatz 25 und der ersten Stirnseite 21 der Kurbelwelle 2 weist die Kurbelwelle 2 einen konstanten Außendurchmesser auf, und ist im wesentlichen nutfrei ausgebildet. Beispielsweise kann lediglich eine kleine Nut im Bereich des Innenrings 51a des ersten Lagers 51 vorgesehen sein, um eine Dichtung 33 aufnehmen zu können für eine optimale Abdichtung.

Auf der axial gegenüberliegenden zweiten Seite der Kurbelwelle 2 verspannt das zweite Befestigungselement 42 die zweite Kurbel 32 direkt gegen eine Stirnseite 22 der Kurbelwelle. Im Detail liegt dabei ein zweiter Schraubenkopf 42a der zweiten Schraube 42 axial an der zweiten Stirnseite 22 der Kurbelwelle 2 an. Dadurch ergibt sich an der zweiten Stirnseite 22 der in Figur 2 gekennzeichnete Axialkraftfluss B über die beteiligten Elemente. Insbesondere erfolgt somit eine axiale Kraftübertragung vom zweiten Schraubenkopf 42a zur zweiten Kurbel 32 sowie vom zweiten Schraubenkopf 42a über die Stirnseite 22 der Kurbelwelle 2 und über das Gewinde zwischen zweitem Befestigungselement 42 und Kurbelwelle 2 zurück zum zweiten Schraubenkopf 52a.

Damit liegt ein zweiter Axialanschlag 37 an der zweiten Stirnseite 22 der Kurbelwelle 2 vor.

Am zweiten Ende, an dem die zweite Kurbel 32 angeordnet ist, weist die Kurbelwelle 2 ferner eine Kettenblattaufnahme 9 auf, welche eingerichtet ist zur Befestigung eines Kettenblatts 90 des Elektrofahrrads 10 (vergleiche Figur 1).

Der Kurbeltrieb 1 zeichnet sich dabei durch eine besonders vorteilhafte mechanische und geometrische Konstruktion aus. So kann eine optimal positionierte und besonders robuste relative Anordnung der Bestandteile des Kurbelbetriebs 1 sichergestellt werden. Insbesondere kann dabei auf Sicherungsringe und entsprechend notwendige Nuten in der Kurbelwelle 2 verzichtet werden, da beispielsweise sämtliche Bauteile von der jeweiligen Stirnseite 21, 22 der Kurbelwelle 2 aus auf die Kurbelwelle 2 aufgeschoben und aufgrund der entsprechenden geometrischen Auslegung exakt positioniert werden können. Dadurch kann eine besonders robuste Kurbelwelle 2 bereitgestellt werden, da eine Kerbwirkung an der Kurbelwelle 2 verhindert werden kann. Ferner bietet der Kurbeltrieb 1 den Vorteil, dass identische, und vorzugsweise standardisierte, Kurbeln 31, 32 und Kurbelschnittstellen zur Drehmomentübertragung verwendet werden können. Somit kann eine besonders einfache und kostengünstige Konstruktion bereitgestellt werden.

## Patentansprüche

1. Kurbeltrieb eines mit Muskelkraft und/oder Motorkraft betreibbaren Fahrzeugs, insbesondere eines Elektrofahrrads (1), umfassend:
- eine Kurbelwelle (2),
- eine erste Kurbel (31), welche auf die Kurbelwelle (2) aufgesteckt ist,
- eine zweite Kurbel (32), welche der ersten Kurbel (31) gegenüberliegend auf die Kurbelwelle (2) aufgesteckt ist,
- ein erstes Befestigungselement (41), das die erste Kurbel (31) an der Kurbelwelle (2) befestigt,
- ein zweites Befestigungselement (42), das die zweite Kurbel (32) an der Kurbelwelle (2) befestigt,
- ein erstes Lager (51) auf der Seite der ersten Kurbel (31),
- ein zweites Lager (52) auf der Seite der zweiten Kurbel (32),
- wobei das erste Befestigungselement (41) die erste Kurbel (31) über das erste Lager (51) gegen die Kurbelwelle (2) verspannt,
- wobei das zweite Befestigungselement (42) die zweite Kurbel (32) gegen eine zweite Stirnseite (22) der Kurbelwelle (2) verspannt, **dadurch gekennzeichnet, dass**
die Kurbelwelle (2) einen nach radial außen vorstehenden Absatz (25) aufweist, an welchem das erste Lager (51) im verspannten Zustand anliegt.

2. Kurbeltrieb nach Anspruch 1, wobei jedes Befestigungselement (41, 42) eine Schraube aufweist, die stirnseitig in die Kurbelwelle (2) eingeschraubt ist.

3. Kurbeltrieb nach Anspruch 2, wobei jedes Befestigungselement (41, 42) jeweils einen Schraubenkopf (41a, 42a) aufweist, und wobei jeder Schraubenkopf (41a, 42a) jeweils mit der entsprechenden Kurbel (41, 42) in axialem Eingriff steht.

4. Kurbeltrieb nach einem der Ansprüche 2 oder 3, wobei ein zweiter Schraubenkopf (42a) des zweiten Befestigungselements (42) an der zweiten Stirnseite (22) der Kurbel (2) anliegt.

5. Kurbeltrieb nach Anspruch 1 bis 4, wobei das erste Lager (51) ein Kugellager, insbesondere ein Rillenkugellager ist, und wobei ein Innenring (51a) des ersten Lagers (51) am Absatz (25) der Kurbelwelle (2) anliegt.

6. Kurbeltrieb nach einem der vorhergehenden Ansprüche, wobei die Kurbelwelle (2) zwischen der ersten Stirnseite (21) und dem ersten Lager (51) nutfrei ausgebildet ist, insbesondere wobei die Kurbelwelle (2) einen konstanten Außendurchmesser (27) zwischen der ersten Stirnseite (21) und dem ersten Lager (51) aufweist.

7. Kurbeltrieb nach einem der vorhergehenden Ansprüche, ferner umfassend einen Tretlagerbereich (6) an welchem die Kurbelwelle (2) mittels der beiden Lager (51, 52) gelagert ist.

8. Kurbeltrieb nach Anspruch 7, wobei die beiden Lager (51, 52) eine angestellte Lagerung am Tretlagerbereich (6) bilden.

9. Kurbeltrieb nach Anspruch 8, wobei das erste Lager (51) als Festlager angeordnet ist.

10. Kurbeltrieb nach Anspruch 8 oder 9, wobei das zweite Lager (52) als Loslager angeordnet ist.

11. Kurbeltrieb nach einem der vorhergehenden Ansprüche, wobei zwischen jeder Kurbel (31, 32) und der Kurbelwelle (2) jeweils eine radiale Verzahnung (7) ausgebildet ist.

12. Kurbeltrieb nach einem der vorhergehenden Ansprüche, ferner umfassend eine Kettenblattaufnahme (9), welche eingerichtet ist zur Befestigung eines Kettenblatts, wobei die Kettenblattaufnahme (9) auf der Seite der zweiten Kurbel (32) angeordnet ist.

13. Mit Muskelkraft und/oder Motorkraft betreibbares Fahrzeug, insbesondere Elektrofahrrad, umfassend einen Kurbeltrieb (1) nach einem der vorhergehenden Ansprüche.

## Claims

1. Crank drive of a vehicle that can be operated by muscle power and/or motor power, in particular an electric bicycle (1), comprising:
- a crankshaft (2),
- a first crank (31), which is attached to the crankshaft (2),
- a second crank (32), which is attached to the crankshaft (2) on the opposite side to the first crank (31),
- a first fastening element (41), which fastens the first crank (31) to the crankshaft (2),
- a second fastening element (42), which fastens the second crank (32) to the crankshaft (2),
- a first bearing (51) on the side of the first crank (31),
- a second bearing (52) on the side of the second crank (32),
- wherein the first fastening element (41) clamps the first crank (31) against the crankshaft (2) via the first bearing (51),
- wherein the second fastening element (42) clamps the second crank (32) against a second end face (22) of the crankshaft (2), **characterized in that** the crankshaft (2) has a radially outwardly projecting shoulder (25), against which the first bearing (51) bears in the clamped state.

2. Crank drive according to Claim 1, wherein each fastening element (41, 42) has a screw, which is screwed into the end face of the crankshaft (2).

3. Crank drive according to Claim 2, wherein each fastening element (41, 42) has a respective screw head (41a, 42a), and wherein each screw head (41a, 42a) is in each case in axial engagement with the corresponding crank (41, 42).

4. Crank drive according to either of Claims 2 and 3, wherein a second screw head (42a) of the second fastening element (42) bears against the second end face (22) of the crank (2).

5. Crank drive according to Claims 1 to 4, wherein the first bearing (51) is a ball bearing, in particular a deep groove ball bearing, and wherein an inner ring (51a) of the first bearing (51) bears against the shoulder (25) of the crankshaft (2).

6. Crank drive according to one of the preceding claims, wherein the crankshaft (2) is formed without grooves between the first end face (21) and the first bearing (51), in particular wherein the crankshaft (2) has a constant outer diameter (27) between the first end face (21) and the first bearing (51).

7. Crank drive according to one of the preceding claims, further comprising a bottom bracket region (6) in which the crankshaft (2) is mounted by means of the two bearings (51, 52).

8. Crank drive according to Claim 7, wherein the two bearings (51, 52) form an adjusted bearing arrangement in the bottom bracket region (6).

9. Crank drive according to Claim 8, wherein the first bearing (51) is arranged as a fixed bearing.

10. Crank drive according to Claim 8 or 9, wherein the second bearing (52) is arranged as a floating bearing.

11. Crank drive according to one of the preceding claims, wherein respective radial toothing (7) is formed between each crank (31, 32) and the crankshaft (2).

12. Crank drive according to one of the preceding claims, further comprising a chainring mount (9), which is configured for fastening a chainring, wherein the chainring mount (9) is arranged on the side of the second crank (32).

13. Vehicle that can be operated by muscle power and/or motor power, in particular an electric bicycle, comprising a crank drive (1) according to one of the preceding claims.

## Revendications

1. Mécanisme de manivelle d'un véhicule pouvant être entraîné par force musculaire et/ou force motrice, en particulier d'une bicyclette électrique (1), comprenant :
- un vilebrequin (2),
- une première manivelle (31) qui est enfichée sur le vilebrequin (2),
- une deuxième manivelle (32), qui est enfichée sur le vilebrequin (2) à l'opposé de la première manivelle (31),
- un premier élément de fixation (41) qui fixe la première manivelle (31) au vilebrequin (2),
- un deuxième élément de fixation (42) qui fixe la deuxième manivelle (32) au vilebrequin (2),
- un premier palier (51) du côté de la première manivelle (31),
- un deuxième palier (52) du côté de la deuxième manivelle (32),
- dans lequel le premier élément de fixation (41) serre la première manivelle (31) contre le vilebrequin (2) par l'intermédiaire du premier palier (51),
- dans lequel le deuxième élément de fixation (42) serre la deuxième manivelle (32) contre un deuxième côté frontal (22) du vilebrequin (2), **caractérisé en ce que**
le vilebrequin (2) présente un épaulement (25) faisant saillie radialement vers l'extérieur, contre lequel le premier palier (51) s'appuie à l'état serré.

2. Mécanisme de manivelle selon la revendication 1, dans lequel chaque élément de fixation (41, 42) comporte une vis qui est vissée du côté frontal dans le vilebrequin (2).

3. Mécanisme de manivelle selon la revendication 2, dans lequel chaque élément de fixation (41, 42) présente respectivement une tête de vis (41a, 42a) et dans lequel chaque tête de vis (41a, 42a) est en prise axiale avec la manivelle correspondante (41, 42).

4. Mécanisme de manivelle selon l'une des revendications 2 ou 3, dans lequel une deuxième tête de vis (42a) du deuxième élément de fixation (42) s'applique contre le deuxième côté frontal (22) de la manivelle (2).

5. Mécanisme de manivelle selon les revendications 1 à 4, dans lequel le premier palier (51) est un palier à billes, en particulier un palier à billes rainuré, et dans lequel une bague intérieure (51a) du premier palier (51) s'applique contre l'épaulement (25) du vilebrequin (2).

6. Mécanisme de manivelle selon l'une des revendications précédentes, dans lequel le vilebrequin (2) est réalisé sans rainure entre le premier côté frontal (21) et le premier palier (51), en particulier dans lequel le vilebrequin (2) présente un diamètre extérieur constant (27) entre le premier côté frontal (21) et le premier palier (51).

7. Mécanisme de manivelle selon l'une des revendications précédentes, comprenant en outre une zone de palier inférieure (6) sur laquelle le vilebrequin (2) est monté au moyen des deux paliers (51, 52).

8. Mécanisme de manivelle selon la revendication 7, dans lequel les deux paliers (51, 52) forment un montage de paliers en opposition au niveau de la zone de boîtier de pédalier (6).

9. Mécanisme de manivelle selon la revendication 8, dans lequel le premier palier (51) est agencé sous la forme d'un palier fixe.

10. Mécanisme de manivelle selon la revendication 8 ou 9, dans lequel le deuxième palier (52) est agencé sous la forme d'un palier flottant.

11. Mécanisme de manivelle selon l'une des revendications précédentes, dans lequel une denture radiale (7) est formée entre chaque manivelle (31, 32) et le vilebrequin (2).

12. Mécanisme de manivelle selon l'une quelconque des revendications précédentes, comprenant en outre une réception de plateau de chaîne (9), qui est configurée pour la fixation d'un plateau de chaîne, la réception de plateau de chaîne (9) étant disposée du côté de la deuxième manivelle (32).

13. Véhicule pouvant être entraîné par force musculaire et/ou force motrice, en particulier bicyclette électrique, comprenant un mécanisme de manivelle (1) selon l'une quelconque des revendications précédentes.
